# EUROPEAN PATENT APPLICATION

(11) **EP 4 265 394 A1**
(43) Date of publication of application: **25.10.2023**
(21) Application number: 21906648.7
(22) Date of filing: 15.12.2021
(51) Int. Cl.: B29C 55/06, C08J 5/18, G01N 21/21

(54) **METHOD FOR MEASURING ORIENTATION OF SILVER NANOWIRE, POLYVINYL ALCOHOL FILM, METHOD FOR PROCESSING POLYVINYL ALCOHOL FILM, AND METHOD FOR PRODUCING POLYVINYL ALCOHOL FILM**

(30) Priority: 16.12.2020 JP 2020208084
(71) Applicant: Resonac Corporation, Tokyo 105-8518 (JP)
(72) Inventor: MIYAMURA, Yasunao, Tokyo 105-8518 (JP); KADOWAKI, Yasushi, Tokyo 105-8518 (JP); YAMATAKE, Kuniaki, Tokyo 105-8518 (JP); HARA, Masanao, Tokyo 105-8518 (JP); YAMAKI, Shigeru, Tokyo 105-8518 (JP); OHATA, Hideki, Tokyo 105-8518 (JP)
(74) Representative: Strehl Schübel-Hopf & Partner
(86) International application number: PCT/JP2021/046239
(87) International publication number: WO 2022/131286

(57) **Abstract**

The present method for evaluating an orientation of silver nanowires is a method for measuring an orientation of silver nanowires included in a polyvinyl alcohol film, the method including measuring, using linearly polarized near-infrared light, a first transmittance T1 for polarized light perpendicular to an orientation direction of silver nanowires and a second transmittance T0 for polarized light parallel to the orientation direction of the silver nanowires in a polyvinyl alcohol film including the silver nanowires, and determining an orientation to be high in a case where a ratio (T1/T0) of the first transmittance T1 to the second transmittance T0 is greater than 1, and determining the orientation to be low in a case where the ratio is close to 1.

## Description

### [Technical Field]

The present invention relates to a method for measuring an orientation of silver nanowires in a polyvinyl alcohol film including the silver nanowires, a polyvinyl alcohol film including silver nanowires having a specific orientation, a method for processing the polyvinyl alcohol film, and a method for producing the polyvinyl alcohol film.

Priority is claimed on Japanese Patent Application No. 2020-208084, filed December 16, 2020, the content of which is incorporated herein by reference.

### [Background Art]

Patent Document 1 discloses a method for measuring an orientation of needle-shaped substances in a material containing the needle-shaped substances, in which the orientation is measured by small-angle X-ray scattering of the material and the orientation is determined from data of a scattering vector thereof. Example 6 of Patent Document 1 discloses a polyvinyl alcohol film including silver nanowires having an S value of 0.30 measured by the measurement method.

Non-Patent Document 1 discloses that silver nanowires have a near-infrared absorption in the longitudinal direction due to a surface plasmon resonance.

### [Citation List]

### [Patent Document]

[Patent Document 1]
Japanese Unexamined Patent Application, First Publication No. 2019-168386

### [Non-Patent Document]

[Non-Patent Document 1]
ACS Nano, 2009, VOL. 3 NO. 1 P21-26.

### [Summary of Invention]

### [Technical Problem]

However, a small-angle X-ray scattering measurement device is a relatively large-scale device. On the other hand, in order to stably produce a polyvinyl alcohol film including silver nanowires having a higher orientation, a method for inspecting a product (a method for measuring an orientation) in a simpler method is required at a site for producing the polyvinyl alcohol film.

In view of the circumstances, an object of one aspect of the present invention is to provide a method for measuring an orientation of silver nanowires by a simpler method and a polyvinyl alcohol film including silver nanowires having a higher orientation.

### [Solution to Problem]

That is, the present invention has the following configurations.

[1] As a first aspect, a method for measuring an orientation of silver nanowires included in a polyvinyl alcohol film, the method including:
   measuring, using linearly polarized near-infrared light, a first transmittance T1 for polarized light perpendicular to an orientation direction of silver nanowires and a second transmittance T0 for polarized light parallel to the orientation direction of the silver nanowires in a polyvinyl alcohol film including the silver nanowires; and
   determining an orientation to be high in a case where a ratio (T1/T0) of the first transmittance T1 to the second transmittance T0 is greater than 1, and determining the orientation to be low in a case where the ratio is close to 1.
[2] As a second aspect, a polyvinyl alcohol film including silver nanowires, in which the silver nanowires have the ratio (T1/T0) of 4 or greater, as measured by the method as described in [1].
[3] A method for processing a polyvinyl alcohol film including silver nanowires, including:
   a step of stretching the polyvinyl alcohol film in an orientation direction of the silver nanowires,
   in which the ratio (T1/T0) in the polyvinyl alcohol film after the stretching is measured by the method as described in [1], and
   a speed of stretching the polyvinyl alcohol film is increased in a case where the ratio (T1/T0) is greater than a preset threshold, and the speed of stretching the polyvinyl alcohol film is decreased in a case where the ratio (T1/T0) is less than the preset threshold.
[4] The method for processing a polyvinyl alcohol film including silver nanowires as described in [3],
   in which the threshold is 4 or greater.
[5] The method for processing a polyvinyl alcohol film including silver nanowires as described in [3] or [4],
   in which the speed of stretching the nanowires is 5% or greater per second with respect to a length in a stretching direction of the polyvinyl alcohol film before the stretching.
[6] As a third aspect, a method for producing a polyvinyl alcohol film, including:
   one or a plurality of steps of processing a polyvinyl alcohol film by the method for processing a polyvinyl alcohol film in the second aspect.

### [Advantageous Effects of Invention]

The orientation of silver nanowires in a polyvinyl alcohol film can be easily measured.

### [Description of Embodiments]

Embodiments of the present invention will be described below, but the present invention can be carried out with appropriate modifications within the scope of the present invention. Numbers, materials, amounts, shapes, numerical values, ratios, positions, configurations, and the like may be modified, added, omitted, or replaced without departing from the scope of the present invention.

### (Method for Measuring Orientation of Silver Nanowires)

The method for measuring an orientation of silver nanowires of the present embodiment is a method for measuring an orientation of silver nanowires included in a polyvinyl alcohol film, the method including, for example, a transmittance measuring step and a determining step in this order. The method for measuring an orientation of silver nanowires of the present embodiment may further include a detecting step before the transmittance measuring step.

In the method for measuring an orientation of silver nanowires of the present embodiment, using linearly polarized near-infrared light, a transmittance T1 for polarized light perpendicular to an orientation direction of the silver nanowires and a transmittance T0 for polarized light parallel to the orientation direction of the silver nanowires are measured in the polyvinyl alcohol film (hereinafter sometimes simply referred to a "film") including the silver nanowires, in which the orientation is determined to be high in a case a ratio (T1/T0) of the transmittance T1 to the transmittance T0 is greater than 1, and the orientation is determined to be low in a case where the ratio is close to 1.

Hereinafter, for convenience of explanation, the transmittance T1 may be referred to as a first transmittance T1, and the transmittance T0 may be referred to as a second transmittance T0.

As described in Non-Patent Document 1, silver nanowires have a near-infrared absorption in the longitudinal direction due to the surface plasmon resonance. Therefore, a polyvinyl alcohol film including oriented silver nanowires functions as a near-infrared polarizing filter.

### (Transmittance Measuring Step)

The transmittance measuring step has a first transmittance measuring step and a second transmittance measuring step. In the transmittance measuring step, the first transmittance measuring step and the second transmittance measuring step may be placed in any order.

In the first transmittance measuring step, for example, the polyvinyl alcohol film is irradiated with linearly polarized near-infrared light, and the first transmittance T1 for polarized light in a direction perpendicular to the orientation direction of the silver nanowires is measured.

In the second transmittance measuring step, for example, the polyvinyl alcohol film is irradiated with linearly polarized near-infrared light, and the second transmittance T0 for polarized light parallel to the orientation direction of the silver nanowires is measured.

Here, the orientation direction of the silver nanowires can be determined without performing the detecting step in a case where the polyvinyl alcohol film is stretched to some extent. In a case where the orientation direction is unknown, it is detected, for example, in a detecting step described later. Since the polyvinyl alcohol film including silver nanowires functions as a near-infrared polarizing filter as mentioned above, there is a difference between the second transmittance T0 and the first transmittance T1. The ratio (T1/T0) of the first transmittance T1 to the second transmittance T0 is 1 in a case where there is no orientation, and the higher the orientation, the greater the value.

The light for measuring the second transmittance T0 and the first transmittance T1 may be near-infrared light (at a wavelength of 700 to 2,500 nm) as long as a surface plasmon resonance occurs in the silver nanowires. In a case where the film has additives other than the silver nanowires, a wavelength of the near-infrared light which is less susceptible to the additives may be selected. In addition, the linearly polarized near-infrared light may be obtained from non-polarized near-infrared light using a polarizing filter or the like. That is, a polarizing filter may be placed between a light source that emits near-infrared light and the polyvinyl alcohol film to irradiate the polyvinyl alcohol film with non-polarized near-infrared light.

### (Detecting Step)

The detecting step is a step carried out as necessary, such as in a case where the orientation direction of the silver nanowires is unknown. The orientation direction of the silver nanowires can be determined without performing the detecting step in a case where the polyvinyl alcohol film is stretched to some extent. In the detecting step, for example, the transmittance in the thickness direction is measured by changing the polarization direction in the in-plane direction of the polyvinyl alcohol film, and any one of the in-plane directions parallel to the polarization direction with the lowest transmittance may be used as the orientation direction. The in-plane direction of the polyvinyl alcohol film is a direction in which the polyvinyl alcohol film spreads, and is any direction perpendicular to the thickness direction. As the light for measuring the transmittance, the same light as that used in the transmittance measuring step can be used. In the detecting step, for example, the angle in the in-plane direction of the polyvinyl alcohol film is changed continuously by 180° and the obtained transmittances in the thickness direction are compared to determine the orientation direction. In addition, the detecting step can also be performed by microscopic observation or the method of Patent Document 1.

### (Determining Step)

In the determining step, for example, the orientation is determined to be higher in a case where the ratio (T1/T0) of the first transmittance T1 to the second transmittance T0 is greater than 1, and the orientation is determined to be lower in a case where the ratio is closer to 1.

The ratio (T1/T0) of the first transmittance T1 to the second transmittance T0 has a correlation with an S value that indicates an orientation by the method of Patent Document 1, as shown in Examples and Comparative Examples which will be described later. Therefore, the method of Patent Document 1 can be preferably substituted in a case where the orientation is desired to be simply measured, for example.

Moreover, since in the method for measuring an orientation of the present embodiment, the measurement can be made in real time, it can also be preferably used, for example, for monitoring in a continuous production step.

### (Method for Processing Polyvinyl Alcohol Film Including Silver Nanowires)

The method for processing a polyvinyl alcohol film including silver nanowires of the present embodiment is, for example, a method for processing a polyvinyl alcohol film including silver nanowires to produce a polyvinyl alcohol film with an improved orientation. Hereinafter, this method may simply be referred to as a method for processing a polyvinyl alcohol film.

The method for processing a polyvinyl alcohol film according to the present embodiment includes a step of stretching a polyvinyl alcohol film including oriented silver nanowires in an orientation direction, in which the ratio (T1/T0) of the first transmittance T1 to the second transmittance T0 in the polyvinyl alcohol film after the stretching by the method for measuring an orientation is measured, in which the stretching speed is increased in a case where the ratio (T1/T0) is greater than a preset threshold and the stretching speed is decreased in a case where the ratio (T1/T0) is less than the preset threshold. Hereinafter, such measurement of the ratio (T1/T0) may be referred to as "transmittance ratio measurement", and such control of the stretching speed may simply be referred to as "stretching speed control".

The transmittance ratio measurement and the stretching speed control may be performed together with stretching of the polyvinyl alcohol film, or may be performed in the order of the stretching of the polyvinyl alcohol film, the transmittance ratio measurement, the stretching speed control, and the stretching of the polyvinyl alcohol film.

In addition, with regard to the preset threshold, a threshold for increasing the stretching speed (a threshold on the upper limit side of the ratio (T1/T0)) and a threshold for decreasing the stretching speed (a threshold on the lower limit side of the ratio (T1/T0)) may be the same value but may also be different values. The threshold for increasing the stretching speed (the threshold on the upper limit side of the ratio (T1/T0)) and the threshold for reducing the stretching speed (the threshold on the lower limit side of the ratio (T1/T0)) preferably provide a hysteresis from the viewpoint of stable production, and both the thresholds can be set within a range that does not deviate from the upper and lower limits of T1/T0 of a desired film.

The threshold for increasing the stretching speed (the threshold on the upper limit side of the ratio (T1/T0)) and the threshold for reducing the stretching speed (the threshold on the lower limit side of the ratio (T1/T0)) are any values selected depending on a desired orientation, but the threshold for increasing the stretching speed (the threshold on the upper limit side of the ratio (T1/T0)) is, for example, a numerical value of 2 or greater and 5 or less, and is preferably a numerical value of 3 or greater, and more preferably a numerical value of 4 or greater. In addition, the threshold for decreasing the stretching speed (the threshold on the lower limit side of the ratio (T1/T0)) is, for example, a numerical value of 1 or greater and 4 or less, and may be 2 or greater and 3 or less.

The threshold for increasing the stretching speed (the threshold on the upper limit side of the ratio (T1/T0)) is, for example, a numerical value of a desired ratio (T1/T0) + 0.2, and may be a numerical value of a desired ratio (T1/T0) + 0.1. The threshold for decreasing the stretching speed (the threshold on the lower limit side of the ratio (T1/T0)) is, for example, a numerical value of {a desired ratio (T1/T0) - 0.2}, and may be a numerical value of {a desired ratio (T1/T0) - 0.1}.

In general, in a case of stretching a resin including needle-shaped substances, the orientation of the needle-shaped substances is increased. However, the silver nanowires in the polyvinyl alcohol film are likely to bend or break due to stretching, and the orientation may be decreased as the film is stretched. Thus, such stretching makes it difficult to obtain a high orientation. In order to suppress the bending or the breakage, the stretching speed may be decreased to reduce a stress applied to the silver nanowires, but the productivity is reduced.

In the present embodiment, in a case where a desired orientation is set as the threshold, the stretching speed is controlled, a high orientation is obtained by suppressing the bending or the breakage, and at the same time, a decrease in the productivity is almost minimal without excessively decreasing the stretching speed.

The increase and the decrease in the stretching speed in the stretching speed control can be performed for each batch in a case where the production step is a batch treatment, or can be in real time in a case where the production step is a continuous step.

That is, the method for processing a polyvinyl alcohol film according to the present embodiment may include, in a batch treatment, a step of stretching the polyvinyl alcohol film in the orientation direction of the silver nanowires, a measuring step of measuring the ratio (T1/T0) in the polyvinyl alcohol film after the stretching, and a step of controlling the stretching speed and stretching the polyvinyl alcohol film in the next batch in the orientation direction of the silver nanowires.

In addition, in a case where the production step is the continuous step, the step of stretching the polyvinyl alcohol film according to the present embodiment may include the measuring step, and while stretching the polyvinyl alcohol film in the orientation direction of the silver nanowires, the ratio (T1/T0) may be measured to perform the stretching speed control in real time.

The speed of stretching the polyvinyl alcohol film is, for example, 1% or greater and 100% or less, and may be 3% or greater, or 5% or greater, per second with respect to the length in the stretching direction of the polyvinyl alcohol film before stretching. In a case where the speed of stretching the polyvinyl alcohol film is X% per second with respect to the length in the stretching direction of the polyvinyl alcohol film before stretching, the length of the polyvinyl alcohol film after n seconds is, for example, {(Initial length of the first polyvinyl alcohol film before stretching) × (1 + 0.01 × X × n)}.

The stretching speed control may simply increase or decrease the speed by a constant amount each time, as compared with the threshold, but from the viewpoint of quickly converging the stretching speed, it is preferable to provide a difference between the amount of speed increase and the amount of speed decrease for one time, and it is more preferable that one amount is 2 to 5 times the other. Furthermore, from the viewpoint of stable production, the stretching speed control is more preferably a proportional control using a difference value between the threshold and the ratio (T1/T0), and in particular, from the viewpoint of suppressing an overshoot in the continuous production step, the stretching speed control is still more preferably a proportional integral differential control (PID control).

In a case where there are a plurality of stretching steps during a step of producing a film, the present embodiment may be applied to any one stretching step, but from the viewpoint of making it easier to obtain a film with a higher orientation, it is more preferable that the present embodiment is applied to more stretching steps, and it is still more preferable that the present embodiment is applied to all the stretching steps.

### (Method for Producing Polyvinyl Alcohol Film)

The method for producing a polyvinyl alcohol film according to the present embodiment has one or a plurality of steps of processing a polyvinyl alcohol film by the method for processing a polyvinyl alcohol film according to the embodiment. According to the present embodiment, it is possible to produce a polyvinyl alcohol film with a further improved orientation.

### [Examples]

The present invention will be described in more detail with reference to Examples and Comparative Examples below, but the present invention is not limited only to the following Examples.

### (Example 1)

A total of 5 mL of an aqueous 5% by mass solution of a polyvinyl alcohol, in which 0.1% by mass of silver nanowires were dispersed, was dropped onto a horizontal substrate of polyethylene terephthalate at a rate of 0.5 mL per second so as not to introduce air bubbles. The liquid film spread on the substrate was dried for 3 days at 25°C in the atmosphere to manufacture a polyvinyl alcohol film including circular silver nanowires with a diameter of about 10 cm.

A plurality of about 1 cm squares were cut from an intermediate portion between the center and the outer edge of the film, and these were used as samples A.

The orientations of these samples were measured.

### (Measurement of Orientation)

A transmittance of the film-shaped sample in the thickness direction was measured with polarized infrared light at a wavelength of 1,600 nm. First, the orientation direction of the in-plane direction of the sample was determined. That is, the transmittance was measured while changing the polarization direction in the in-plane direction of the sample, and the direction parallel to the polarization direction with the lowest transmittance was defined as an orientation direction of the sample. Next, in the in-plane direction, a first transmittance T1 for polarized light perpendicular to the orientation direction of the sample and a second transmittance T0 for polarized light parallel to the orientation direction of the sample were measured, and a ratio (T1/T0) of the first transmittance T1 to the second transmittance T0 was determined. Furthermore, in a case where the transmittance did not change even with a change in polarization direction in the in-plane direction of the sample, it was assumed that there was no orientation, that is, the ratio (T1/T0) was 1.

As a result, all the samples of Example 1 had a ratio (T1/T0) of 2. In addition, in a case where the measurements on the samples A were also made by the method of Patent Document 1, all the S values were 0.24.

One of the plurality of the samples A was impregnated in a saturated aqueous borax solution for 1 second, and subjected to stretching at a stretching speed of 10% per second until the length reached 150% in a case where the original length was defined as 100%, with respect to the orientation direction of the same sample. Using this as a sample B, the ratio (T1/T0) was measured by the means described in the orientation measurement, and the orientation of the silver nanowires was thus measured.

In a case where the measured ratio (T1/T0) was 3.8 or less, the stretching speed was decreased by 2% per second, in a case where the ratio was greater than 4.1, the stretching speed was increased by 1% per second, and the impregnation with the above-mentioned aqueous borax solution was repeated with a new sample A until the increase or the decrease in the stretching speed was no longer observed. That is, the stretching speed was adjusted as follows: in a case where the measured ratio (T1/T0) was 3.8 or less, the stretching speed was decreased by 2% per second, and in a case where the ratio was greater than 4.1, the stretching speed was increased by 1% per second.

As a result of controlling the stretching speeds for different batches of the polyvinyl alcohol film in this manner, the sample B with a ratio (T1/T0) of 4 was obtained at a stretching speed of 5% per second. In addition, the S value of the sample B measured by the same method as the means was 0.45.

The sample B was divided into two equal parts and superimposed so that the orientation directions were parallel or perpendicular to each other, and the transmittances for non-polarized light at a wavelength of 1,600 nm were compared. Thus, it was confirmed that the ratio of the transmittance in a case where the orientation directions were parallel to each other to the transmittance in a case where the orientation directions were perpendicular to each other is 2.5 and such the sample can be applied as a polarizing plate.

### (Comparative Example 1)

A sample A was obtained in the same manner as in Example 1, except that the silver nanowires were not dispersed (not included). In a case where this sample A was subjected to measurement of an orientation, T1/T0 was 1. In addition, the S value measured on the sample A by the same method as the means was 0.

### [Industrial Applicability]

The film obtained in the present embodiment can be preferably used as an optical element such as a near-infrared polarizing plate.

## Claims

1. A method for measuring an orientation of silver nanowires included in a polyvinyl alcohol film, the method comprising:
measuring, using linearly polarized near-infrared light, a first transmittance T1 for polarized light perpendicular to an orientation direction of silver nanowires and a second transmittance T0 for polarized light parallel to the orientation direction of the silver nanowires in a polyvinyl alcohol film including the silver nanowires; and
determining an orientation to be high in a case where a ratio (T1/T0) of the first transmittance T1 to the second transmittance T0 is greater than 1, and determining the orientation to be low in a case where the ratio is close to 1.

2. A polyvinyl alcohol film comprising silver nanowires,
wherein the silver nanowires have the ratio (T1/T0) of 4 or greater, as measured by the method according to Claim 1.

3. A method for processing a polyvinyl alcohol film including silver nanowires to increase an orientation of the silver nanowires, the method comprising:
a step of stretching the polyvinyl alcohol film in an orientation direction of the silver nanowires,
wherein the ratio (T1/T0) in the polyvinyl alcohol film after the stretching is measured by the method according to Claim 1, and
a speed of stretching the polyvinyl alcohol film is increased in a case where the ratio (T1/T0) is greater than a preset threshold, and the speed of stretching the polyvinyl alcohol film is decreased in a case where the ratio (T1/T0) is less than the preset threshold.

4. The method for processing a polyvinyl alcohol film according to Claim 3,
wherein the threshold is a numerical value of 4 or greater.

5. The method for processing a polyvinyl alcohol film according to Claim 3 or 4,
wherein the speed of stretching the polyvinyl alcohol film is 5% of greater per second with respect to a length in a stretching direction of the polyvinyl alcohol film before the stretching.

6. A method for producing a polyvinyl alcohol film, comprising:
one or a plurality of steps of processing a polyvinyl alcohol film by the method for processing a polyvinyl alcohol film according to any one of Claims 3 to 5.
